# EUROPEAN PATENT APPLICATION

(11) **EP 2 800 351 A1**
(43) Date of publication of application: **05.11.2014**
(21) Application number: 12851946.9
(22) Date of filing: 25.09.2012
(51) Int. Cl.: H04N 5/232, G06T 1/00, G06T 13/40, H04N 5/225

(54) **EXPRESSION OUTPUT DEVICE AND EXPRESSION OUTPUT METHOD**

(30) Priority: 24.11.2011 JP 2011256064
(71) Applicant: NTT DOCOMO, INC., Chiyoda-ku Tokyo 1006150 (JP)
(72) Inventor: KIMURA, Shinji, Tokyo 1006150 (JP); HORIKOSHI, Tsutomu, Tokyo 100-6150 (JP); FUKUMOTO, Masaaki, Tokyo 100-6150 (JP)
(74) Representative: Hoffmann Eitle
(86) International application number: PCT/JP2012/074595
(87) International publication number: WO 2013/077076

(57) **Abstract**

To enable information on facial expressions to be continued to be obtained even if a user moves, without requiring attachment of markers, there is provided a spectacle-type device 1 worn by a user that comprises first camera 110L and second camera110R, each of which is provided with a fisheye lens at an edge of a front part of frame 100. Face images obtained by each camera are transmitted to information processing apparatus 2. Information processing apparatus 2 develops an image from each camera to a plane, and composes images of portions of both eyes, both eyebrows and a mouth with an image representing a frontal face captured in advance. Information processing apparatus 2 recognizes a facial expression from the face image obtained from the composition, and displays a three-dimensional model of the recognized facial expression.

## Description

### Technical Field

The present invention relates to output of information on a facial expression.

### Background Art

Inventions for outputting information on a facial expression include, for example, those disclosed in Patent Documents 1 and 2. The invention disclosed in Patent Document 1 sets an optical flow by capturing a whole of a driver's face by a camera provided in a car, and specifies a driver's facial expression by collating prestored facial expression patterns with the set optical flow. The invention disclosed in Patent Document 2 captures a face of a person with markers on it by plural cameras attached to a visor of a helmet worn by the person. The invention analyzes positions of the markers in images captured by the cameras, generates a model representing the face based on a result of the analysis, and outputs the model.

### Prior Art Documents

### Patent Document

Patent Document 1: JP-A-2005-182375
Patent Document 2: JP-A-2009-506442

### Disclosure of Invention

### Problems to be Solved by the Invention

In the invention disclosed in Patent Document 1, a camera is fixed to a car at a position to capture a face of a driver when the driver faces the front. The camera cannot capture a whole face and cannot specify a facial expression when the driver turns his/her face or moves his/her head to a different position. In this regard, in the invention disclosed in Patent Document 2, relative positions of plural cameras to the face with markers remain constant even if the person moves and/or turns his/her face because the cameras move together with the face within a particular orientation and/or distance. That is, the invention can output facial expressions of the person wearing the helmet consistently. However, in the invention disclosed in Patent Document 2, markers on the face must be captured for outputting a model representing his/her facial expression, which causes inconvenience for the person.

The purpose of the present invention is to make it possible to obtain information on facial expressions even if a user moves, without requiring the user to keep the markers on his/her face.

### Means of Solving the Problems

An apparatus for outputting information on a facial expression according to one embodiment of the present invention includes: a frame mounted on a head of a user; an imaging unit that is attached to the frame and captures, from a predetermined direction, an image representing a face of the user; a conversion unit that converts coordinates of a portion of the image captured by the imaging unit that represents a predetermined portion of the face of the user into coordinates in an image of the face captured from a direction different from the predetermined direction by a projection method different from the projection method employed in the imaging unit; a recognition unit that recognizes a facial expression of the user based on the coordinates converted by the conversion unit; and an output unit that outputs an image representing the facial expression recognized by the recognition unit.

In a preferred embodiment, the frame has a shape of a spectacle frame, an angle of view in the imaging unit is an angle of view in which the captured image represents at least the predetermined portion of the face, and the apparatus further comprises a transmission unit that transmits the image output by the output unit to another device.

In another preferred embodiment, the conversion unit maps the portion of the image representing the predetermined portion of the face to an image on a predetermined plane by use of mapping transformation, and converts coordinates in the portion of the mapped image on the predetermined plane representing the predetermined portion of the face into coordinates in an image of the predetermined portion of the face which is captured from a direction different from the predetermined direction.

In yet another preferred embodiment, the recognition unit recognizes the facial expression using an algorithm corresponding to a direction of the face in the image converted by the conversion unit.

In yet another preferred embodiment, the apparatus for outputting information on a facial expression further comprises an operation unit that is operated by a user, and a region identifying unit that identifies a region designated in the image captured by the imaging unit based on an operation via the operation unit, wherein the conversion unit converts a portion of the image captured by the imaging unit in the region identified by the region identifying unit.

In yet another preferred embodiment, the apparatus for outputting information on facial expression further comprises a storage unit that stores, in advance, the image of the face captured from the direction different from the predetermined direction by the projection method different from the projection method employed in the imaging unit, wherein the conversion unit identifies feature points of the face represented by the image captured by the imaging unit that correspond to feature points of the face represented by the image stored in the storage unit, and determines a calculation method for converting coordinates in the image captured by the imaging unit into coordinates in the image captured from the direction different from the predetermined direction based on coordinates of the identified feature points in the image captured by the imaging unit and coordinates of the feature points in the image stored in the storage unit corresponding to the identified feature points.

In yet another preferred embodiment, the apparatus for outputting information on facial expression further comprises a storage unit that stores, in advance, the image of the face captured from the direction different from the predetermined direction by the projection method different from the projection method employed in the imaging unit, wherein the conversion unit identifies a region in the image of the face stored in the storage unit that corresponds to a region bounded by lines connecting feature points of the face represented by the image captured by the imaging unit, and determines a calculation method for converting the image captured by the imaging unit in the region bounded by lines connecting the feature points of the face into the image captured from the direction different from the predetermined direction based on the region bounded by lines connecting feature points of the face represented by the image captured by the imaging unit and the identified region in the image stored in the storage unit.

In yet another preferred embodiment, the conversion unit converts the portion of the image captured by the imaging unit representing the predetermined portion of the face using the calculation method, and composes the converted image representing the predetermined portion of the face in a location of the predetermined portion of the face in the image stored in the storage unit.

In yet another preferred embodiment, the frame comprises a sensor that specifies a state of the head of the user, and the recognition unit recognizes a facial expression of the user using the image converted by the conversion unit and the state specified by the sensor.

The present invention also provides a method for outputting information on a facial expression according to one embodiment of the present invention that includes: obtaining an image of a face of a user captured by an imaging unit that is attached to a frame mounted on a head of the user and capturing, from a predetermined direction, an image representing a face of the user; converting coordinates of a portion of the image obtained in the obtaining step that represents a predetermined portion of the face of the user into coordinates in an image of the face captured from a direction different from the predetermined direction by a projection method different from the projection method employed in the imaging unit; recognizing a facial expression of the user based on the coordinates converted in the converting step; and outputting an image representing the facial expression recognized in the recognizing step.

### Effects of the Invention

According to the present invention, it is possible to obtain information on facial expressions of a user continuously even if the user moves, without requiring the user to keep markers on his/her face.

### Brief Description of the Drawings

FIG. 1 is a diagram showing apparatuses of first and second embodiments of the present invention.
FIG. 2 is a block diagram showing a hardware configuration of spectacle- type device 1.
FIG. 3 is an image represented by first image signal.
FIG.4 is a figure for describing a projection method of first camera 110L and second camera 110R.
FIG.5 is a diagram showing a hardware configuration of information processing apparatus 2.
FIG. 6 is a block diagram showing a functional configuration implemented in information processing apparatus 2.
FIG. 7 is a figure describing planar development.
FIG. 8 is a figure showing an example of a region in UV Plane.
FIG. 9 is a figure showing an example of planar development in an image.
FIG.10 is a figure showing an example of a checkerboard CK.
FIG. 11 is an example of an image of a face with a checkerboard CK attached on the face.
FIG. 12 is a planar developed image of an image of a face with a checkerboard CK attached on the face.
FIG. 13 is a flowchart showing a processing flow of a preparation operation.
FIG. 14 is a flowchart showing a processing flow of an output operation.
FIG. 15 is a block diagram showing a functional configuration implemented in information processing apparatus 2 of the second embodiment.
FIG. 16 is a flowchart showing a processing flow of a preparation operation of the second embodiment.
FIG. 17 is an image showing an example of feature points.
FIG. 18 is a figure showing an example of tables in the second embodiment.
FIG. 19 is a figure showing correspondence between feature points.
FIG. 20 is a flowchart showing a processing flow of an output operation of the second embodiment.
FIG. 21 is a figure showing an appearance of headset 3 of a modification.
FIG. 22 is a diagram showing a hardware configuration of a spectacle-type device of a modification.
FIG. 23 is a flowchart showing a processing flow of information processing apparatus 2 of a modification.
FIG. 24 is a figure showing examples of regions bounded by lines connecting feature points.
FIG. 25 is a figure showing regions in a three-dimensional model in which an image of a front view of a face are composed.

### Description of Reference Symbols

1: spectacle-type device; 2: information processing apparatus; 3: headset; 100: frame; 110L: first camera; 110R: second camera; 120: communication unit; 130: control unit; 140: storage unit; 21: liquid crystal display; 22: keys; 23: touchpad; 200: bus; 201: control unit; 202: storage unit; 203: operation unit; 204: display unit; 205: communication unit; 211: planar development unit; 212: projection conversion unit; 213: expression recognition unit; 214: face model composition unit; 215: conversion unit; 301: headphone; 302: arm; 303: microphone; 304: camera; 320: communication unit

### Mode for Carrying out the Invention

### [First Embodiment]

### <Configuration>

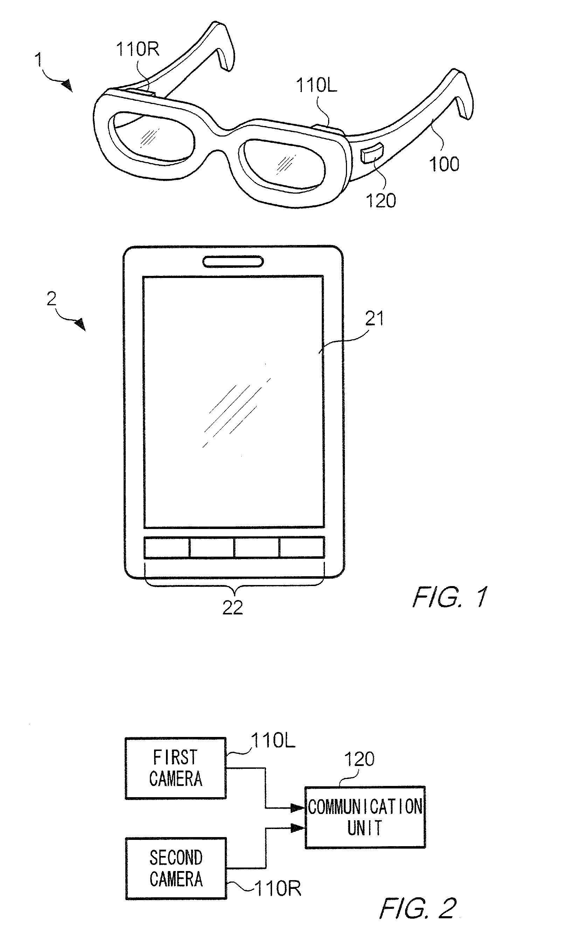

FIG. 1 is a diagram showing a spectacle-type device 1 and information processing apparatus 2 of the first embodiment of the present invention. Spectacle-type device 1 has a shape of spectacles and is worn by a user. Information processing apparatus 2 is an apparatus that outputs facial expressions of a user who wears spectacle-type device 1.

FIG. 2 is a block diagram showing a hardware configuration of spectacle-type device 1. Spectacle-type device 1 comprises frame 100 having a shape of a spectacle frame, first camera 110L, second camera 110R, and communication unit 120. On a front part of frame 100, first camera 110L is located at the left edge and second camera 110R is located at the right edge from a viewpoint of a user who wears spectacle-type device 1. Because first camera 110L and second camera 110R are fixed to frame 100, each camera is always located at a position within a certain distance range from a face and will capture the face from a direction within a certain direction range. First camera 110L and second camera 110R are digital cameras, and each has a fisheye lens and an imaging element. First camera 110L captures half of a face of a user in the left side, and second camera 110R captures half of the face of the user in the right side. First camera 110L outputs a first image signal indicating an image obtained by the imaging element, and second camera 110R outputs a second image signal indicating an image obtained by the imaging element.

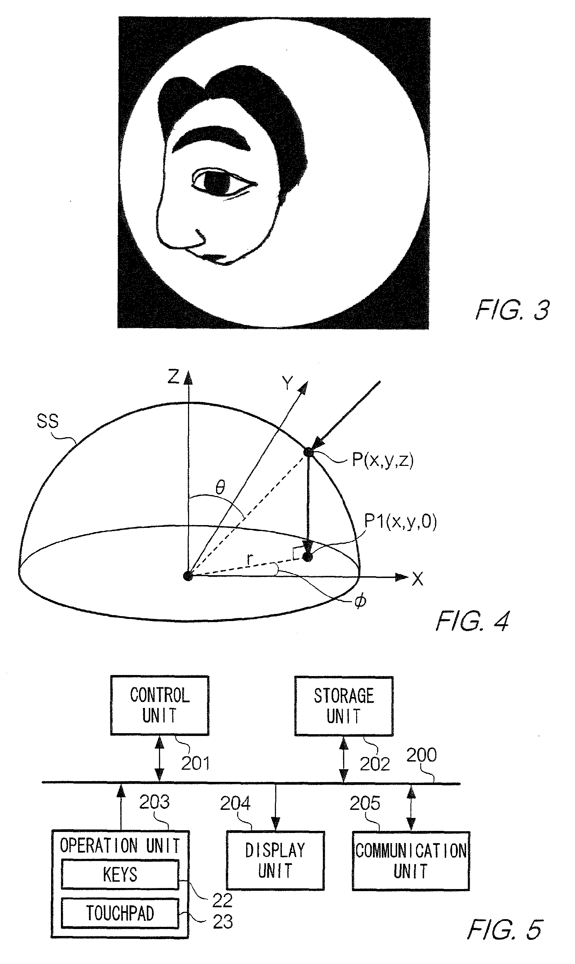

FIG. 3 is a figure showing an example of an image represented by the first image signal. As shown in FIG. 3, the first image signal output by first camera 110L indicates an image including half of a face of a user in the left side. Similarly, the second image signal output by second camera 110R indicates an image including half of a face of a user in the right side. It is to be noted that while frame 100 is also captured by first camera 110L and second camera 110R in a practical sense, for simplification, frame 100 is not shown in FIG. 3.

Here, a projection method of first camera 110L and second camera 110R will be described with reference to FIG. 4. First, in a three-dimensional space represented by a X-axis, a Y-axis, and a Z-axis that bisect each other at right angles, virtual spherical surface SS in which an optical axis of the fisheye lens is placed on the Z-axis. It is assumed that a light ray that reaches the original point of the virtual spherical surface SS in a direction at θ degrees with the Z-axis and at ϕ degrees with the X-axis crosses the coordinate (x, y, z) of point P. Point P is projected to an XY plane (an image plane of the imaging element) and the coordinate of point P is determined by the θ and the ϕ. For example, in a case that the projection method of the fisheye lens is an orthographic projection method, the light ray reaching the original point via point P is projected to point P1 shown in the figure in the XY plane where a coordinate of point P1 is (x, y, 0). When a distance between the original point and point P1 is r, r is proportionate to sinθ, and therefore, an image projected to the XY plane becomes larger in an area neighboring a center of a circle shown in the figure, and the image becomes smaller in an area neighboring a circumference of the circle. It is to be noted that r is proportionate to θ in a case that the projection method of the fisheye lens is an equidistance projection method, and r is proportionate to tan(0/2) in a case that the projection method is a solid projection method. In each of these cases, the image projected to the XY plane through the fisheye lens is crooked and different from an image projected through a standard lens following a central projection method.

Referring to FIG. 2, communication unit 120 is placed on/at a temple part of frame 100. Communication unit 120 is connected to first camera 110L and second camera 110R. Communication unit 120 obtains a first image signal output from first camera 110L and the second image signal output from second first camera 110R. Communication unit 120 functions as a communication interface to perform wireless communication, and transmits the obtained first image signal and the obtained second image signal to information processing device 2 by wireless communication.

FIG. 5 is a diagram showing a hardware configuration of information processing apparatus 2. Each part of information processing device 2 is connected to bus 200. Each part of information processing device 2 exchanges data through bus 200.

Communication unit 205 functions as a communication interface for performing wireless communication and/or wire communication. Communication unit 205 receives each image signal transmitted from communication unit 120 of spectacle-type device 1. Furthermore, communication unit 205 has a function of obtaining image data from external devices, such as digital cameras, connected with a communication cable.

Display unit 204 has liquid crystal display 21 as a display device and displays characters, a graphics screen, a menu screen, and so on, for operation of information processing device 2 under control of control unit 201. Operation unit 203 has plural keys 22 to operate information processing apparatus 2, a transparent touchpad 23 placed on a surface of liquid crystal display 21, and so on. Data indicating operated keys 22 are output from operation unit 203 to control unit 201 when a user of information processing device 2 operates keys 22. In addition, data indicating a touched position are output from operation unit 203 to control unit 201 when a user of information processing apparatus 2 touches touchpad 23.

Storage unit 202 has a nonvolatile memory and stores a program executed by control unit 201, and various data used for outputting a user's facial expression. For example, storage unit 202 stores an expression recognition program to implement a function to output a facial expression. Furthermore, storage unit 202 stores calibration data CD, expression database DB, face model data MD used for recognition of a facial expression. Further information on these data will be provided below.

Control unit 201 is a microcontroller that includes CPU (Central Processing Unit), ROM (Read Only Memory) and RAM (Random Access Memory). When information processing apparatus 2 is powered on, control unit 201 executes the program stored ROM and/or storage unit 202. Control unit 201 that executes the program functions as a control means that controls the other units of information processing apparatus 2, and when control unit 201 obtains data output from operation unit 203, control unit 201 controls the other units depending on the obtained data.

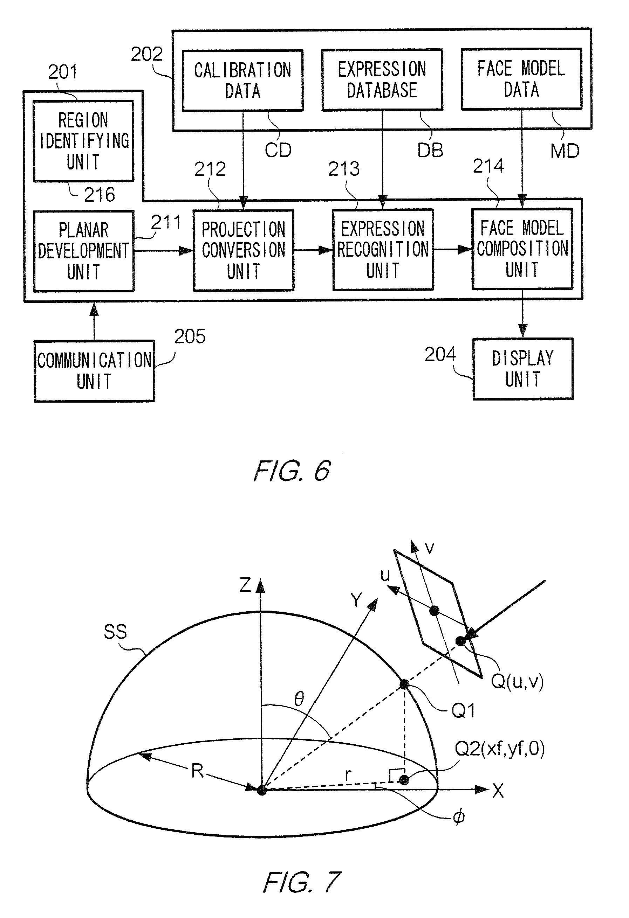

Furthermore, a function to output a facial expression of a user who wears spectacle-type device 1 is implemented when control unit 201 executes the expression recognition program. FIG. 6 is a block diagram showing a functional configuration implemented in information processing apparatus 2.

Planar development unit 211 obtains a first image signal, and also a second image signal obtained by communication unit 205. The images that the first image signal and the second image signal represent are crooked images as described above, and it is difficult to identify eyes, a nose, eyebrows, a mouth, and so on, to recognize a facial expression in such a crooked image. Therefore, planar development unit 211 converts the images represented by the first image signal and the second image signal to generate planar images in a virtual plane. It is to be noted that, in the following explanation, to generate a planar image in the virtual plane by converting the first image signal and the second image signal representing images projected to the XY plane through a lens following a projection method except the central projection method is referred to as planar development.

Here, planar development is described with reference to FIG. 7. For the sake of computing a planar image from images projected through the fisheye lens, a plane (UV plane of FIG. 7) to which an image in an XY plane, i.e. an image plane of the imaging element, is mapped is virtually defined. And a coordinate where a light ray, which passes through the UV plane and crosses virtual spherical surface SS, is projected in the XY plane is calculated. It is to be noted that formulas used for this calculation are set, in advance, according to a projection method of the fisheye lens and/or specifications of the fisheye lens.

For example, in a case when a projection method of the fisheye lens is an orthographic projection method, if a light ray, that passes through point Q of the UV plane and an angle between the light ray and the Z-axis is θ and an angle between the light ray and the X-axis is ϕ, crosses virtual spherical surface SS at point Q1 on virtual surface SS, the light ray is projected at a position of point Q2 in XY plane shown in the figure. Here, a coordinate of point Q2 is (xf, yf, 0), and xf is calculated by xf=Rsinθcosϕ, and yf is calculated by yf=Rsinθcosϕ in a case when it is assumed that a radius of virtual spherical surface SS is R. In this way, point Q on the UV plane corresponds to a pixel that is positioned at point Q2 in the image plane of the imaging element. Accordingly, a pixel in the UV plane corresponding to point Q2 in the XY plane can be calculated by use of the mapping transformation from the XY plane to the UV plane, and an image mapped to the virtual plane can be obtained from an image projected to the XY plane through the fisheye lens by calculating all coordinates in the UV plane corresponding to coordinates in the image in the XY plane by use of the mapping transformation.

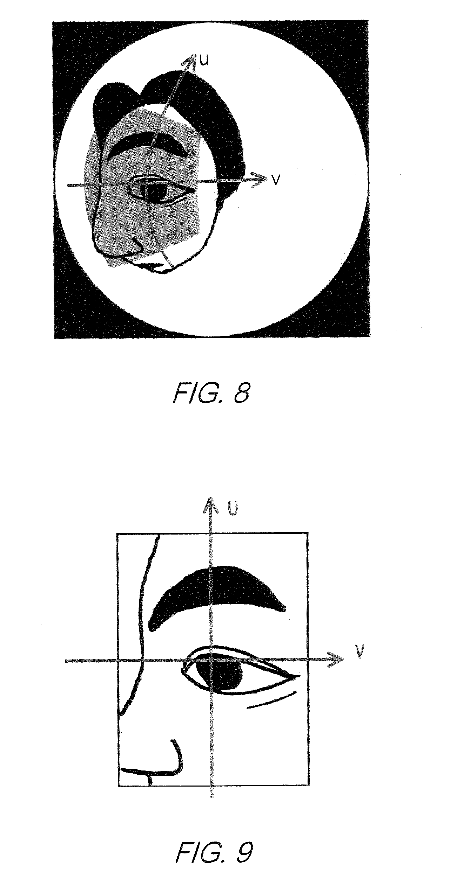

FIG. 8 shows an example of an image represented by the first image signal, and FIG. 9 shows an example of an image obtained by developing the image shown in FIG. 8 on a plane. In a case where an image in the UV plane is projected to a gray region, shown in FIG. 8, in the image obtained by first camera 110L, an image shown in FIG.9 is obtained from the image of the gray region by use of the mapping transformation to the UV plane.

Projection conversion Unit 212 generates images that would be obtained when each portion of a right eye, a left eye, a right eyebrow, a left eyebrow, and mouth of a user is captured from an image developed on a plane by planar development unit 211. 3*3 matrix, referred to as homography matrix, is used to obtain a frontal image from images of each portion that is developed on the plane. It is to be noted that something that represents a correspondence relation (conversion equation) with coordinates of the planar developed image and coordinates of the frontal image is referred to here as a calculation method. That is to say this homography matrix is a kind of calculation method. Image conversion using the homography matrix is, for example, described in "Visual Servo-II-Basics of Computer Vision" of "Systems, Control and Information vol.53, No.11," that is a journal of The Institute of System, Control and Information Engineers. The image that represents a captured frontal face can be obtained by using the homography matrix.

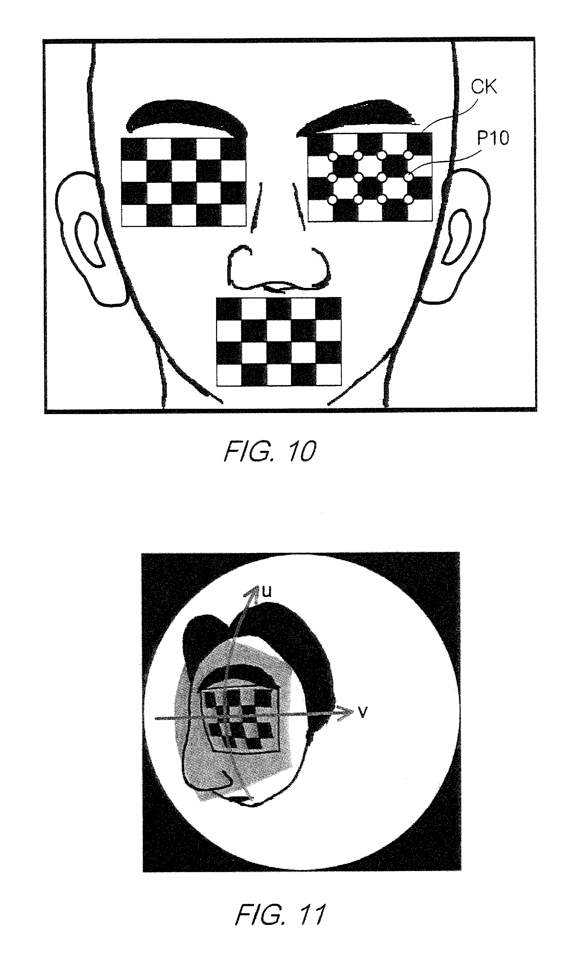

It is to be noted that it is necessary to capture, in advance, an image of a frontal face, and obtain a correspondence relation with an image representing the captured frontal face and a planar developed image for the sake of obtaining the homography matrix. Here, the correspondence relation specifies positions where a point is projected on each image. To obtain the correspondence relation, in the first embodiment, checkerboard CK having black rectangle regions and white rectangle regions, shown in FIG. 10, is used. It is to be noted that one advantage of using checkerboard CK is ease of detection of grid points (vertexes of black rectangle regions and white rectangle regions) that are extraction points extracted from an image, and are examples of feature points in the checkerboard, so as to specify with ease correspondence relations between the two images. In this way it is guaranteed that each grid point exists on each of the images.

In the case of checkerboard CK shown in FIG. 10, the homography matrix between the two images can be specified from the correspondence relation, because 12 grid points, which are represented as white dots shown in FIG. 10, can be specified with ease at the two images. It is to be noted that a method is described in the article, "Flexible Camera Calibration By Viewing a Plane From Unknown Orientations," by Zhengyou Zhang, as a method to specify a correspondence relation between two images using a checkerboard CK. In the first embodiment, by use of the described method the homography matrix is specified.

To specify the homography matrix, first, checkerboards CK are attached to portions of a user's face (for example, a left eye, a right eye, a right eyebrow, a left eyebrow and a mouth) to obtain desired frontal images. The image shown in FIG. 10 is obtained by capturing the frontal face by use of a camera with a standard lens, while attaching checkerboards CK to the user's face.

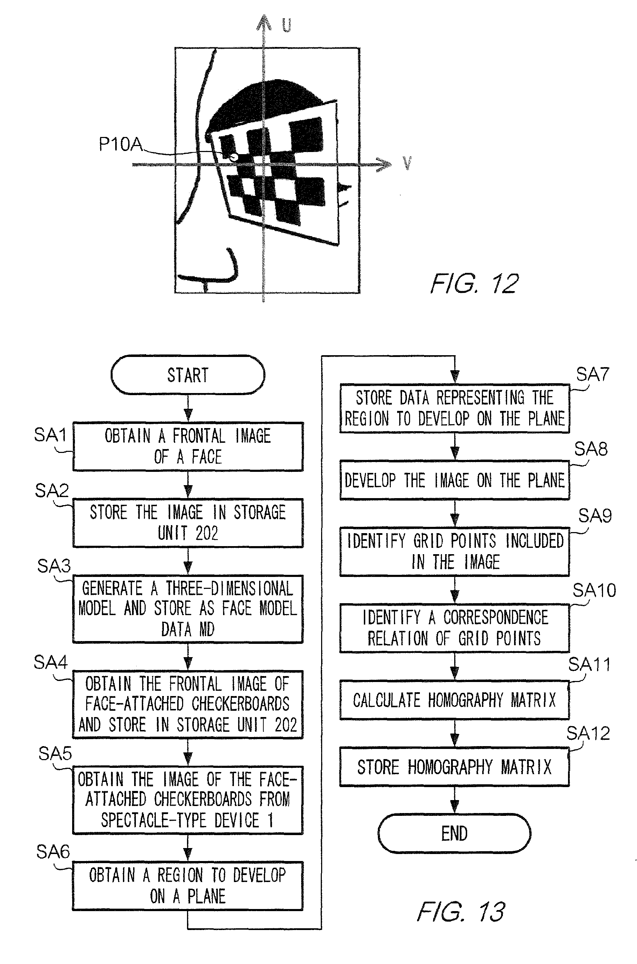

Next, an image shown in FIG. 11 is obtained by first camera 110L, by capturing the face of the user wearing spectacle-type device 1 while attaching checkerboards CK to the face. An image shown in FIG. 12 is obtained by developing a gray region of the portion of the left eye shown in FIG. 11 on the UV plane. Similarly, a planar developed image of the portion of the mouth is obtained by developing the portion of the mouth on the UV plane. Furthermore, an image of the right side of the face is obtained by second camera 110R, and planar developed images of the portion of the right eye and the portion of the mouth are obtained by developing the obtained image. For simplification, checkerboards CK attached to the right eyebrow, the left eyebrow and the mouth are not shown in FIG. 11 and FIG. 12.

In this way, after obtaining images captured with the same checkerboards CK by spectacle-type device 1 and the camera placed at the front of the face, specifying the correspondence relation of grid points of checkerboards CK enables the homography matrix to be specified between the planar developed image (FIG. 12) and the frontal image of the face. The homography matrix is specified, in advance, using checkerboards CK as described, and the specified homography matrix is stored in storage unit 202 as calibration data CD. Regarding the right eye, the left eye, the right eyebrow, the left eyebrow and the mouth, frontal images can be generated from the image developed on the plane by planar development unit 211 by using the stored homography matrix.

Reference is made to FIG. 6 once more. Expression recognition unit 213 uses the images generated by projection conversion unit 212 and data included in expression database DB stored in storage unit 202, and recognizes a facial expression (for example, an emotion such as surprise, anger, fear, hatred, sorrow and happiness, with movement of portions of a face such as blinking/widening of eyes, raising of eyebrow, and changes at corners of the mouth). It is to be noted that known facial expression recognition algorithms may include various kinds of algorithms such as an algorithm by which movement of facial striated muscles is determined, or an algorithm by which an amount of movement of feature points of a face is estimated, while expression database DB includes data for an algorithm to be used.

Facial model composition unit 214 generates a three-dimensional model of a face based on face model data MD stored in storage unit 202, and an expression recognized by expression recognition unit 213. Face model data MD is data generated by a picture of a frontal face, a range scanner, and so on, and is data representing a three-dimensional model of a user's face. Face model composition unit 214 processes the three-dimensional model represented by face model data MD based on the expression recognized by expression recognition unit 213, and generates a three dimensional model of the recognized face. The stored face model data MD representing the three-dimensional model of the user's face is used for generating a three-dimensional model of the user's face with the facial expression recognized by use of spectacle-type device 1 worn by the user. It is to be noted that techniques for making a facial three-dimensional model from a picture of frontal face and modifying a facial expression of the three-dimensional model include a technique referred to as Motion Portrait (registered trademark). When face model composition unit 214 generates a three-dimensional model of a face, face model composition unit 214 outputs the generated three-dimensional model to display unit 204, and the facial three-dimensional model is displayed on liquid crystal display 21 of display unit 204.

### <Operation>

Next, operations of the first embodiment will be described below. It is to be noted that operations of the first embodiment generally are classified as a preparation operation to prepare data used for outputting a user's facial expressions and/or generating the three-dimensional model, and an output operation to output information on user's facial expressions using the prepared data. In the following description, the preparation operation is described first, and the output operation is described next.

FIG. 13 is a flowchart showing a processing flow of a preparation operation. The processing shown in FIG. 13 is triggered by an operation made by a user to instruct information processing device 2 to perform the preparation operation by use of operation unit 203. First, information processing device 2 obtains an image by capturing a user's frontal face to obtain face model data MD (step SA1). Specifically, the user's face is captured squarely by a digital camera, and communication unit 205 obtains a captured image from the digital camera. It is to be noted that a lens of the digital camera used for this capture is a so-called standard lens, and the obtained image of the face has fewer distortions than an image provided by a fisheye lens. When information processing apparatus 2 obtains the image from an external device, information processing apparatus 2 stores the obtained image in storage unit 202 (step SA2).

After storing the frontal image of the face, information processing apparatus 2 generates a facial three-dimensional model using the stored image and stores the facial three-dimensional model (step SA3). It is to be noted that the previously described technique of Motion Portrait may be used when generating a three-dimensional model. The generated three-dimensional model is stored in storage unit 202 as face model data MD.

Then, information processing apparatus 2 obtains an image for making a homography matrix. First, checkerboards CK are attached at the positions of the left eye, the right eye, the right eyebrow, the left eyebrow, the mouth, and so on, of the user's face, and the user's face is captured by the digital camera with the standard lens. Information processing apparatus 2 obtains the captured image (FIG. 10) from the digital camera, and stores the obtained image in storage unit 202 (step SA4). Next, the user wears spectacle-type device 1, and the face having attached thereto checkerboards CK is captured by first camera 110L and second camera 110R. Information processing apparatus 2 obtains image signal obtained by the capturing from spectacle-type device 1 via wireless communication in communication unit 205 (step SA5).

Information processing device 2 displays an image represented by the image signal obtained from spectacle-type device 1 to liquid crystal display 21. Here, both the image captured by first camera 110L and the image captured by second camera 110R are displayed. Then, region identifying unit 216 of information processing apparatus 2 obtains regions to be developed on a plane on the image provided by spectacle-type device 1 (step SA6). Specifically, when a user designates regions including checkerboards CK in the displayed image by touching touchpad 23, the designated region is obtained as a region to develop on a plane. For example, in a case of the image obtained by first camera 110L, a region including the left eye, a region including the left eyebrow and a region including the mouth are designated. In a case of the image obtained by second camera 110R, a region including the right eye, a region including a right eyebrow, and a region including the mouth are designated. Information processing apparatus 2 stores development region data representing the obtained regions in storage unit 202 as calibration data CD (step SA7).

When step SA7 is concluded, planar development unit 211 of information processing apparatus 2 develops the image represented by the image signal obtained from spectacle-type device 1 based on the development region data stored in step SA7. In this way, the portion of the left eye and the portion of the mouth are developed on the plane in the image represented by the first image signal, and the portion of the right eye and the portion of the mouth are developed on the plane in the image represented by the second image signal.

Next, information processing device 2 specifies grid points of checkerboards CK included in the image obtained in step SA4 and specifies grid points of checkerboards CK included in the image obtained in step SA7 (step SA9). When concluding the processing of step SA9, information processing apparatus 2 identifies grid points, which correspond to each grid point included in the image obtained in step SA4, in the image obtained in step SA7. For example, grid point P10A included in the image of the portion of the left eye developed on the plane shown in FIG. 12 is identified as a grid point that corresponds to grid point P10 of the portion of the left eye shown in FIG. 10.

When concluding the processing of step 10, information processing apparatus 2 calculates a homography matrix based on a correspondence relationship of grid points obtained in steps SA10 (steps SA11), and stores the calculated homography matrix as calibration data CD in storage unit 202 (step SA12). By the above-mentioned operation, calibration data CD used for outputting information on facial expressions and face model data MD used for generating a three-dimensional model are stored in storage unit 202.

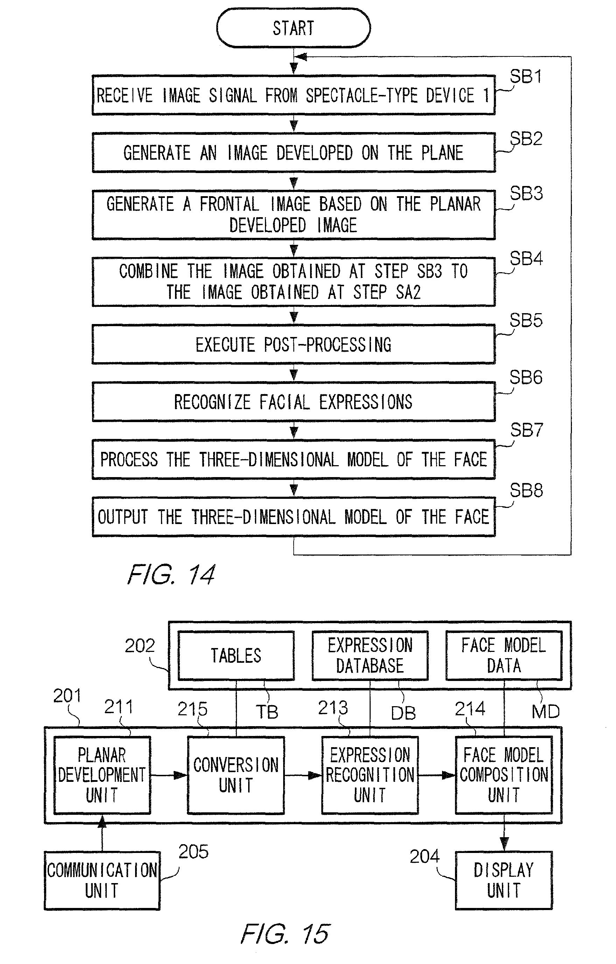

Next, the output operation is described below. FIG. 14 is a flowchart showing a processing flow of an output operation. When an operation of ordering output of a user's facial expressions is carried out in operation unit 203, processing shown in FIG. 14 is executed. First, when the user, who detached checkerboards CK from his/her face, wears spectacle-type device 1, the first image signal output by first camera 110L and the second image signal output by second camera 110R are transmitted via communication unit 120, and the image signals transmitted via communication 120 is received at communication unit 205 (step SB1).

When the image signals are received at communication unit 205, planar development unit 211 develops the images, which are represented by the image signals obtained from spectacle-type device 1, on a plane based on the development region data stored in step SA7 (step SB2). For example, in a case that an image provided by first camera 110L is an image shown in FIG. 3 and development region data sets for a region including the left eye and a region including the mouth for an image provided by first camera 110L are stored, an image representing the planar developed region including the left eye and an image representing the planar developed region including the mouth are obtained from the image provided by first camera 110L. In a case that development region data sets for a region including the right eye and a region including the mouth for an image provided by second camera 110R are stored, an image representing the planar developed region including the right eye and an image representing the planar developed region including the mouth are obtained from the image provided by second camera 110R.

When the planar developed image is obtained, projection conversion unit 212 uses the homography matrix included in calibration data CD stored in storage unit 202, and generates an image in which the right eye is seen squarely, an image in which the left eye is seen squarely, and an image in which the mouth is seen squarely, from the planar developed image of the right eye, the planar developed image of the left eye, and the planar developed image of the mouth (step SB3).

When the image seen squarely is obtained for the right eye, left eye, and the mouth, expression recognition unit 213 generates an image in which the obtained image is combined with the image stored in step SA2 (step SA4). In this way, portions of the right eye, the left eye and the mouth included in the face image stored in step SA2 are replaced with the planar developed images obtained in step SB3.

When concluding the processing of step SB4, expression recognition unit 213 executes post-processing (step SB5) to the image obtained in step SB4. For example, light irradiated to the face may differ between the image obtained in step SA2 and the image provided by spectacle-type device 1, and thus a hue of the images may be different. In such a case, when the image obtained in step SA2 is combined with the planar developed image, a border of a composite part may appear as outstanding. This is prevented by executing a processing to apply a part low-pass filter such as a gauss filter and/or a median filter, and/or by executing a processing to correct a brightness and/or colors (chroma saturation, luminosity), to the border part of the composite part. It is to be noted that although the processing of step SB5 is executed in the first embodiment, the processing of step SB5 may be omitted.

When concluding the processing of step SB5, expression recognition unit 213 recognizes facial expressions regarding the image obtained by the post-pressing, using known recognition algorithms of facial expressions (step SB6). Information such as user's feeling, opening condition of eyes, rictus condition, and so on, can be obtained, by recognition processing of the facial expression. When information about a user's expressions in step SB6 is obtained, face model composition unit 214 reads face model data MD from storage unit 202, and processes the facial three-dimensional model represented by face model data MD based on the information obtained by expression recognition unit 213(step SB7). In this way, a three dimensional model, of the opening condition of eye and/or rictus condition that corresponds to the information obtained by expression recognition unit 213, is generated. Face model composition unit 214 outputs the image representing the generated three-dimensional model to display unit 204 (step SB8). When the image representing the three-dimensional model is transmitted to display unit 204, the transmitted three-dimensional image is displayed on liquid crystal display 21.

As described above, in the first embodiment, after the homography matrix is obtained at the preparation operation, a user's facial expressions can be output without keeping attached markers for recognizing a user's facial expressions, and thus the user is not inconvenienced. Furthermore, even if the user changes a direction and/or a position of his/her face, capture of the face can still be carried out with spectacle-type device 1. Therefore, relative positions of cameras for the face remain constant, and the user's facial expressions can be output constantly. In addition, the user can confirm his/her facial expression with information processing apparatus 2 when the user operates information processing apparatus 2 wearing spectacle-type device 1.

### [Second Embodiment]

Next, the second embodiment of the present invention will be described. In the second embodiment, a user's facial expressions are recognized by spectacle-type device 1 and information processing device 2 as in first embodiment. However, an operation for recognizing facial expressions by information processing apparatus 2 is different from that of the first embodiment. Therefore, the same composition as that of the first embodiment is not described, and only differences relative to the first embodiment are described below.

FIG. 15 is a block diagram showing a functional configuration implemented in information processing apparatus 2 and showing data stored in storage unit 202, of the second embodiment. As shown in FIG. 15, control unit 201 of the second embodiment realizes use of conversion unit 215 as a substitute for projection conversion unit 212. Furthermore, storage unit 202 stores tables TB as a substitute for calibration data CD.

Conversion unit 215 identifies outer corners of the eyes, inner corners of the eyes, edges of top, bottom, right and left of the iris of the eyes, that are extraction points extracted from the image that is the frontal image of the face or the image developed on the plane, as feature points. Conversion unit 215 generates tables TB storing coordinates of the identified feature points included in the image for each feature point.

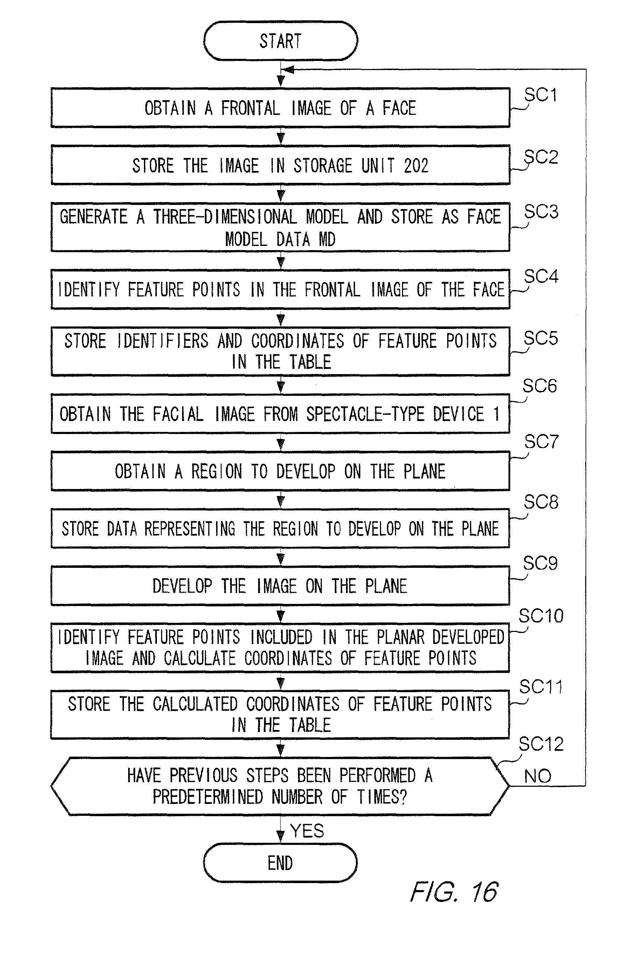

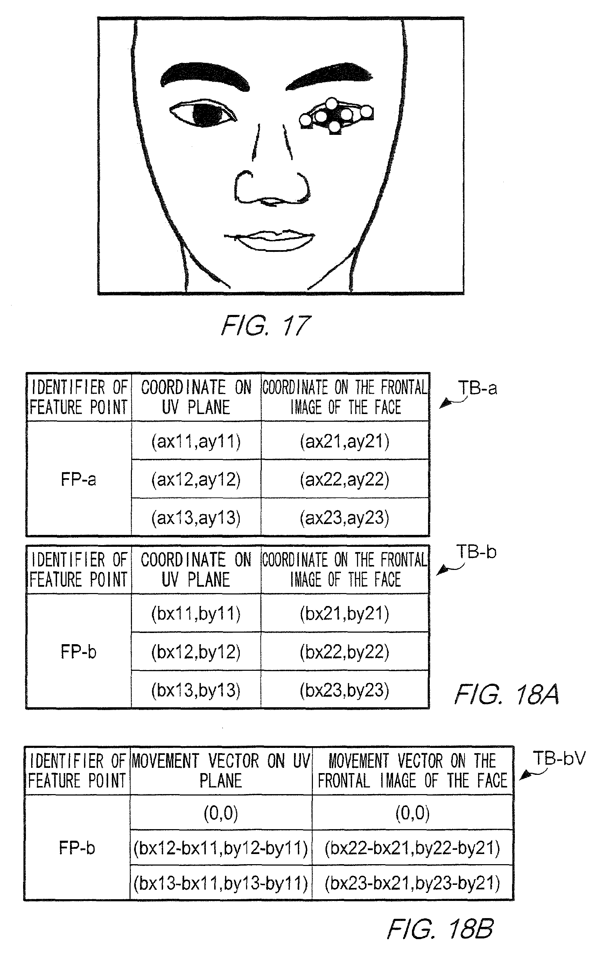

FIG. 16 is a flowchart showing a processing flow of a preparation operation of the second embodiment. Processing of step SC1 - step SC3 is the same as the processing of step SA1 - step SA3. After concluding the processing of step SC 3, as shown in FIG. 17, information processing apparatus 2 identifies the outer corner of the eyes, inner corner of the eyes, edges of top, bottom, right and left of the iris of the eyes, as feature points for the frontal image of the face (step SC 4). Information processing apparatus 2 may identify other portions of the face as feature points.

Next, information processing apparatus 2 assigns an identifier to each identified feature point, and stores coordinates of each feature point in tables TB as shown in FIG. 18(A). It is to be noted that tables TB are generated for each feature point, and a number of tables TB depends on a number of the identified feature points (step SC5).

Next, after obtaining the image from spectacle-type device 1 in step SC6, information processing apparatus 2 executes processing of step SC7 - step SC9. The processing of step SC7 - step SC9 is the same as the processing of step SA6 - step SA 8 in the first embodiment, and thus description of the processing is omitted. After concluding the processing of step SC9, information processing apparatus 2 identifies feature points in the planar developed image as in step SC4, and calculates coordinates of the identified feature points included in the planar developed image (step SC10).

Then, information processing apparatus 2 (conversion unit 215) identifies feature points that correspond to the feature points identified at step SC10, among the feature points identified at step SC4. Information processing apparatus 2 stores coordinates of the identified feature points in association with coordinates calculated at step SC10 to table TB (step SC11).

By executing the processing of step SC 1 - step SC10 a predetermined number of times while changing the facial expressions (NO at step SC12), as shown in FIG. 18(A), plural coordinates for each of the feature points are obtained. It is to be noted that it may be necessary to execute the processing of step SC3, step SC7, step SC8 once only, and repetitive execution may not be required.

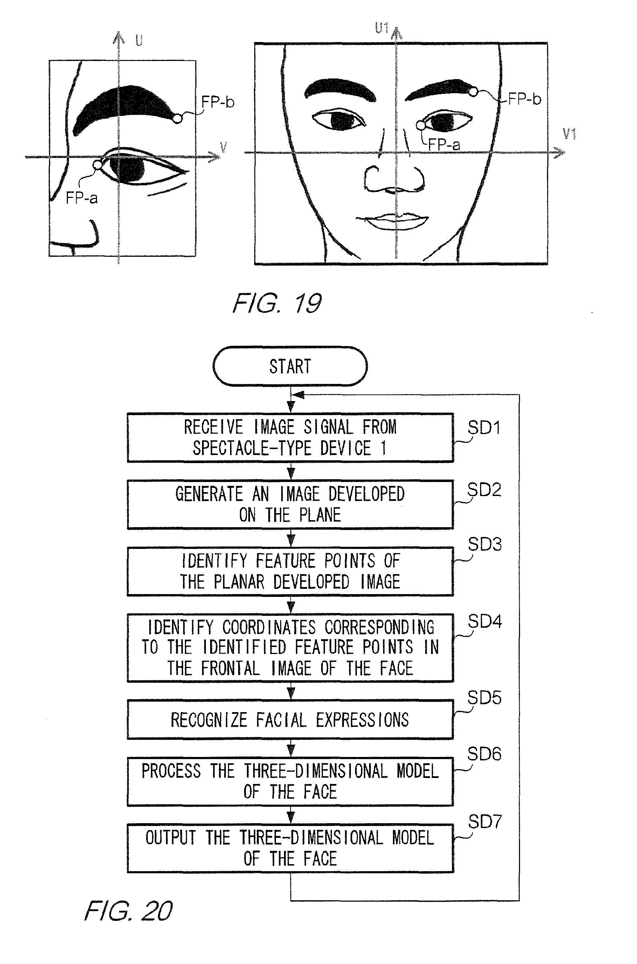

As shown in FIG. 19, for example, regarding the inner corner of the right eye (FP-a), which is an example of feature points, the coordinate in the planar developed image (coordinate (ax11, ay11) in the left image in FIG. 19) is stored in association with the coordinate in the frontal image of the face (coordinate (ax21, ay21) in the right image in FIG. 19) to table TB-a. And by executing the processing of step SC1 - SC10 repeatedly by changing facial expressions, as shown in FIG. 18, plural coordinates for the inner corner of the right eye are stored in table TB-a.

Regarding the outer corner of the right eyebrow (FP-b), which is an example of feature points, the coordinate in the planar developed image (coordinate (bx11, by22) in the left image in FIG. 19) is stored in association with the coordinate in the frontal image of the face (coordinate (bx21, by21) in the right image in FIG. 19) in table TB-b. Regarding the outer corner of the right eyebrow, by executing the processing of step SC1 - SC10 repeatedly with changing facial expressions, as shown in FIG. 18, plural coordinates also are stored in table TB-b.

It is to be noted that tables TB are generated and stored in the second embodiment. However, control unit 201 (conversion unit 215) may set up an arithmetic expression to calculate coordinates of the feature points in the frontal image of the face from the coordinates of the feature points in the planar developed image uniquely based on tables TB, and store the arithmetic expression instead of tables TB. In this case, processing to set up the arithmetic expression is executed after step SC 12. The arithmetic expression may be set up using a method such as a last-square method, while handling the coordinates of tables TB as inputs. By use of the arithmetic expression, upon giving coordinates of feature points of the planar developed image, coordinates of the feature points, corresponding to the feature points in the frontal image, can be calculated uniquely. It is to be noted that, in the second embodiment, each of a table and an arithmetic expression, representing a correspondence relation between the coordinates of feature points in the planar developed image and the coordinates of feature points in the frontal image, are referred to as a calculation method.

Since structural features of faces vary between individuals, coordinates of feature points also vary between individuals. Therefore, essentially, it is desirable to use a calculation method generated for each person. However, generation of a calculation method corresponding to a user, each time a user changes, requires considerable effort. Therefore, a calculation method may be made standard by setting up relative movement vectors from a standard facial expression (for example, expressionless) for each feature point. An aspect of the invention in which movement vectors are used is described below focusing on an end of a right eyebrow (feature point FP-b), with reference to FIG. 18(B).

When the coordinate (bx21, by21) of an end of a right eyebrow in a frontal image is applied to the coordinate of the feature point in the standard facial expression, the coordinate of the feature point changes to (bx2n, by2n) by changing the facial expressions (here, each instance of n is a number corresponding to a facial expression). Next, a movement vector (bx2n-bx21, by2n-by21) from the standard coordinate is calculated. For example, by2n-by21 becomes an equilateral value in a case of a facial expression in which an end of an eyebrow is raised, and by2n-by21 becomes a negative value in a case of a facial expression in which the end of the eyebrow is lowered. And bx2n-bx21 becomes an equilateral value in a case of a facial expression in which ends of the eyebrows move close to a central part from a right and left direction of the face. In this way, an equilateral value or a negative value becomes the same for any user regardless of a structure of a user's face. Therefore, by remaking the table TB-b using the coordinates shown in FIG. 18 (A) focusing on the movement vector, table TB-bV shown in FIG. 18(B) can be obtained. In this way, the calculation method generated based on the table storing the coordinate, can be rebuilt from table TB-bV.

For example, in a case of setting up a calculation method beforehand from table TB-a generated about user A, if the generated calculation method for user A is used for calculation of the coordinates of the frontal face image for the end of the right eyebrow of user B, it is difficult to obtain a correct coordinate for the frontal image, due to differences in calculation methods resulting from differences in facial configurations of each person. However by setting up a calculation method generated from table TB-bV of user A and storing the movement vectors beforehand, a movement vector from a standard facial expression of user B can be obtained. Accordingly, positions of feature points of a frontal image of a face can be obtained more precisely even if a user using spectacle-type device 1 is different from a user for whom table TB-bV is generated.

Specifically, for example, when user A and user B have a similar expression (for example, raising of an eyebrow), if each raises an end of a same eyebrow, it is apparent that a vector of V direction in the UV plane becomes an equilateral value, and a vector of V1 direction in U1V1 plane becomes an equilateral value. In other words, by using the calculation method generated by the table storing the movement vectors, individual differences caused by structural differences in a face can be reduced, and positions of feature points in the frontal facial image can be calculated more precisely.

Accordingly, the processing of step SC1 - step SC12 for setting up the calculation method does not need to be executed for each person for whom recognition of a facial expression is performed, by using the table storing the movement vector. That is, a calculation method, generated by using the table generated for user A, may be used for calculation of the coordinates of the feature points. In other words, it is not necessary to generate a calculation method each time recognized facial expressions for a user are replaced, and thus inconvenience to a user can be avoided.

It is to be noted that in a case of using a calculation method generated in advance for facial expression recognition of a user, it is possible to advance to the output operation described below only by storing coordinates of feature points (standard coordinates of movement vectors) of the standard facial expression (for example, expressionless) at a start timing of the facial expression recognition, without executing the processing of step SC1 - step SC12.

Next, the output operation in the second embodiment is described below with reference to the flowchart shown in FIG. 20. Processing of step SD1 and SD2 is the same as the processing of step SB1 and SB2 in the first embodiment. When concluding the processing of step SD2, information processing apparatus 2 identifies feature points included in the planar developed image (step SD3).

Then, information processing apparatus 2 (conversion unit 215) calculates the coordinates of feature points in the frontal image of the face regarding the feature points identified at step SD3 from the calculation method (a table storing the coordinates of feature points, a table storing the movement vectors, or the arithmetic expression generated from those tables) generated at the processing shown in FIG. 16 (step SD4). For example, in a case that a facial expression changes and a position of an inner corner of an eye moves as a result of a change in the facial expression, in a planar developed image, a coordinate of the inner corner of the eye of the changed expression in the frontal image of the face is calculated from coordinates ((ax11, ay 11) and (ax21, ay21)) of the inner corner of the eye stored at table TB-a, or the calculation method representing the correspondence relation of movement vectors.

It is to be noted that when calculating the coordinates of feature points using the table, it may be the case that exactly the same coordinates as the coordinates of feature points specified at step SD 3 are not stored in the table prepared preliminarily. In this case, coordinates of feature points in the frontal image will not be found uniquely. However, by using the table, the coordinates of feature points in the frontal image can be found uniquely by searching a nearest coordinate to the coordinate identified at step SD3 among the coordinates stored in the table, and then referring to the coordinate. It is to be noted that a coordinate may be calculated not only by referring to a nearest one coordinate, but also by referring to plural coordinates located near the coordinate and by performing liner interpolation. In other words, the larger a number of repetitions of processing shown in FIG. 16 is, the higher precision of the coordinate calculated at step SD4 becomes.

Information processing apparatus 2 recognizes the changed facial expression from the coordinates of feature points calculated at step SD4 (step SD5). Information processing apparatus 2 processes the facial three-dimensional model based on the recognized facial expression (steps SD6), and outputs the processed three-dimensional model (step SD7).

In the second embodiment, a user's facial expression can be output without use of checkerboards CK or a homography matrix. It is to be noted that, when recognizing facial expressions, movement of facial feature points based on the coordinates calculated at step SD4 may be recognized, the frontal image of the face may be obtained by performing morphing of the facial frontal image, and facial expressions can thus be recognized from the obtained image of the face.

### [Modifications]

Exemplary embodiments of the present invention are described above; however, the exemplary embodiments described in the foregoing are mere examples for carrying out the present invention. The present invention may be carried out by applying the following modifications to the above-described exemplary embodiments. It is to be noted that the following modifications may be used in any appropriate combination.

In the first embodiment described above, checkerboards are attached to the left eyebrow and the right eyebrow, and a homography matrix is obtained. The matrix may be obtained, not by attaching checkerboards to the left eyebrow and the right eyebrow, but by attaching checkerboards to the right eye, the left eye, and the mouth, only. In a similar way, in the second embodiment, feature points of the left eyebrow and the right eyebrow may be omitted. Furthermore, in the first embodiment, the homography matrix may be obtained by attaching checkerboards to both eyebrows and both eyes, but without attaching checkerboards to the mouth. In a similar way, in the second embodiment, feature points may be extracted for both eyebrows and both eyes, but not extracted for the mouth. In other words, recognition of the facial expression is not limited to each constitution of the embodiments, and the way of recognition may be modified as long as portions of the face used for recognition of the facial expressions are predetermined so that the facial expressions can be recognized from the predetermined portions.

In the first and second embodiments described above, first camera 110L and second camera 110R each have a fisheye lens. However, the lens is not limited to a fisheye lens, and other lenses that have angles of view able to capture a user's eyes, eyebrows, nose and mouth, may be used.

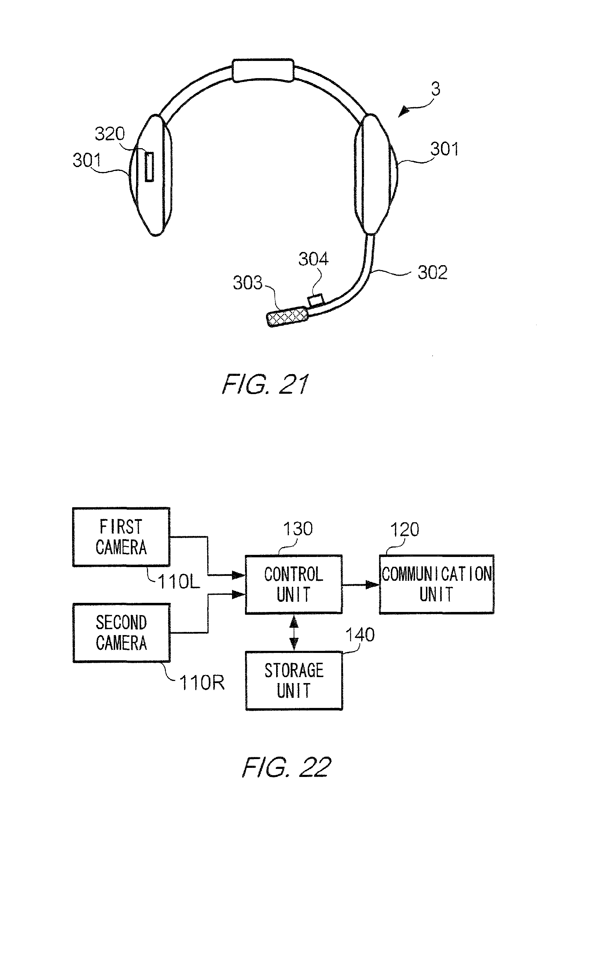

Moreover, in the first embodiment and the second embodiment described above, a device that has a shape of spectacles is provided with a camera for capturing a user's face. However, a shape of a device provided with the camera is not limited to a shape of spectacles. For example, a headset comprising headphones and a microphone may be provided with the camera. FIG. 21 is a figure showing an example of headset 3 of the present modification.

Headset 3 comprises headphones 301. Moreover, headset 3 comprises arm 302, and comprises microphone 303 and camera 304 on the tip of arm 302. Headset 3 comprises communication unit 320 connected to camera 304. It is to be noted that the constitution of communication unit 320 is the same as that of communication unit 120. In this constitution, a user's face is also captured by camera 304, and images obtained by camera 304 also can be sent to information processing apparatus 2. It is to be noted that arms 302 may be provided at both a right side and a left side of headset 3, and first camera 110L may be placed at arm 302 located to the left of a user, and second camera 110L may be placed at arm 302 located to the right of the user.

Moreover, in the first and second embodiments described above, face model composition unit 214 outputs images representing a three-dimensional model to display unit 204. However, images representing a three-dimensional model may be transmitted to other information processing devices via communication unit 205. For example, images in which a user's face is captured may be transmitted to an intended party via a videophone. In such a case, however, the user may not wish to have displayed his/her facial image captured by a camera upon awakening. In this case, by executing the facial expression recognition program by mobile phone and transmitting images representing a three-dimensional model to a device of an intended party with the user wearing spectacle-type device 1, a user's feelings can be conveyed to the intended party by way of the three-dimensional model without the user's actual face being displayed to the intended party.

Furthermore, images of a user's face can be transmitted via videophone to the intended party by mobile phone. However, to do so a user must continuously capture images of his/her face while holding the mobile phone, and thus the user is required to be stationary while transmitting images of the face of the user. However, the present modification enables a user's facial expressions to be provided to an intended party even if the user is not stationary, because the user's face can continue to be captured. Moreover, by the present invention, the user's facial expressions can be provided to the intended party by using a mobile phone that does not include a camera.

Furthermore, in the first embodiment described above, checkerboards CK are attached to the user's face. However, frame 100 may be provided with a projector and the projector may project a pattern of checkerboards CK on the user's face instead of attaching to the user's face checkerboards CK. In this way, it is not necessary to attach checkerboards CK to the user's face in a preparation operation, whereby a preparation operation can be made simpler.

In the first and second embodiments described above, the three-dimensional model is generated based on images obtained by first camera 110L and second camera 110R. However, the three-dimensional face model may be generated by using a device other than a camera, such as a sensor for detecting a state of a portion (hereinafter referred to as a "head portion") from the neck upwards.

For example, a technique referred to as lip-sync is known for use in recognition of audio picked up by a microphone, and for display of an image of a mouth when pronouncing the recognized audio. Spectacle-type device 1 of the present invention may be provided with a microphone, and a shape of a mouth, which is an example of a state of a head portion, may be identified by lip-sync. The facial three-dimensional model may be processed so as to have a shape of the identified mouth. According to the present modification, minute movements of the corner portions of the mouth can be reproduced. In addition, in a case where it is difficult to capture a region neighboring a mouth by spectacle-type device 1, facial expressions can be recognized by combining an image of a region neighboring eyes obtained by spectacle-type device 1, and movement of the mouth detected when the user speaks.

In addition, spectacle-type device 1 may be provided with a sensor detecting pulse wave and/or brain wave of the head portion, and a physical state and/or psychological state of the user may be identified by analyzing information obtained by the sensor, and the facial three-dimensional model may be processed so as to become a facial expression corresponding to the identified state.

In addition, spectacle-type device 1 may be provided with an acceleration sensor and/or a gyro sensor, and a state of the head portion such as a direction and/or a degree of inclination of the user's face may be monitored, and a direction and/or a degree of inclination of the facial three-dimensional model to be output may be modified in association with the monitored direction and/or the monitored degree of inclination. The present modification makes it possible for the output facial three-dimensional model to be a side face or an inclined head. Also, it is assumed that the image, which is obtained with spectacle-type device 1, moves slightly when the user is moving. To remove an influence of such blurring, the blurring may be identified using a detection result of the acceleration sensor, so that the blurring of the image may be corrected. It is to be noted that, correction of the blurring of the image need not be limited to a method with an acceleration sensor, and correction may be carried out using image processing.

In the first embodiment described above, the image obtained from spectacle-type device 1 is planar developed and is composed for the frontal facial image, and the facial expression is recognized from the image obtained from the composition. The image of first camera 110L and the image of second camera 110R may be planar developed, and the facial expression may be recognized by the planar developed images without the images being composed. For example, the facial expression can be recognized from the planar developed image if features of each portion of the face planar developed every plural expression in expression database DB.

It is to be noted that, in the present modification, the image obtained by the planar development is not an image wherein a face is captured squarely, and may be, for example, an image as shown in FIG. 9; in other words, an image wherein the face is captured from an oblique direction of a lateral direction and not a front direction. Therefore, for facial recognition, an algorithm for recognizing facial expressions by analyzing an image captured squarely is not used, but rather an algorithm for recognizing facial expressions by analyzing an image captured of face from an oblique or lateral direction is used.

The present modification enables processing performed in control unit 201 to be reduced, because use of a homography matrix and processing in using a homography matrix becomes unnecessary.

In the first embodiment described above, facial expressions of a user are recognized, and three-dimensional models of the recognized facial expressions are output. However, the image obtained at step SB 4 or step SB 5 may be output. The present modification enables processing performed in control unit 201 to be reduced, because in processing of the facial expression recognition of the generation of the three-dimensional models is not performed.

In the first and second embodiments described above frame 100 is provided with 2 cameras. A camera with a fisheye lens may be provided at a center part of a front part of a frame 100, and the camera may also capture a user's face. Furthermore, a direction of each camera need not be limited to constitution that is fixed, and rather allows for appropriate adjustment. Alternatively, either first camera 110L or second camera 110L may be provided in frame 100. An image of an eye captured by either camera may be planar developed and combined in the image of the frontal face, and the facial expressions recognized. In this case, although the facial expressions cannot be recognized definitively from an expression such as closing only one eye, facial expressions can be recognized when it is assumed that a left half and a right half of a face make the same movement.

In the first and second embodiments described above, a three-dimensional model of the face is output. However, an output model is not limited to a three dimensional model. For example, a position of a user's arm and/or leg may be identified by capturing a user's arm and/or leg by a camera provided in spectacle-type device 1, and a three dimensional model including the arm and/or the leg at the identified position may be generated and output.

In a case that a method to identify feature points included in an image in the first embodiment described above is adopted, a region of checkerboards CK may be identified by identifying vertexes of rectangular checkerboards CK included in the obtained image, and the identified region may be stored as a development region representing a region to develop on the plane.

In the first and second embodiments described above, a user designates a region to develop on a plane. However, a region to develop on the plane need not be limited to a region designated by a user. Although differences exist among individuals, with regard to an image obtained from each camera of spectacle-type device 1, positions of eyes and mouth will enter a constant region. Therefore, a predetermined region included in the image obtained by each camera may be stored as a region to develop on a plane.

In the first and second embodiments described above, a control unit to execute a facial expression recognition program may be provided in spectacle-type device 1. FIG. 22 is a block diagram showing a hardware configuration of a spectacle-type device of the present modification. Control unit 130 is a microcontroller provided with CPU, ROM and RAM, and stores the facial expression recognition program in the ROM. Storage unit 140 stores the same data as storage unit 202. When the facial expression recognition program is executed in control unit 130, planar development unit 211, projection conversion unit 212, expression recognition unit 213, and face model composition unit 214 are implemented, and a three dimensional model of the face can be output based on the images of each camera, as with information processing apparatus 2.

Also, in the first and second embodiments described above, spectacle-type device 1 and information processing device 2 are separate devices. However, communication unit 120 of spectacle-type device 1 and communication unit 205 of information processing unit 2 are connected by a communication cable, and these devices may be treated as a single facial expression output apparatus. Moreover, spectacle-type device 1 may be provided with a display device such as a head-mounted display. In this case, for example, when the device is used with a videophone, a user can transmit his/her facial expressions to a call partner at both sides via the videophone equipping spectacle-type device 1. Also, a user can recognize a facial expression of a calling partner, and if images transmitted from spectacle-type device 1 of the caller partner are displayed in the head-mounted display, the images can be transmitted by videophone without use of hands.

In the first and second embodiments described above, the facial expression recognition program is executed in information processing apparatus 2, and the facial expressions are recognized in information processing apparatus 2. The device that recognizes the facial expressions is not limited to a facial expression recognition apparatus.

For example, a server device in a computer network may execute a facial expression recognition program, and the server may recognize the facial expressions, and may generate the three-dimensional models. In this case, information processing device 2 may receive the generated three-dimensional models and display them.

Also, sharing of rules between information processing apparatus 2 and the server device is not limited to this aspect. The server may perform the facial expression recognition, and information processing apparatus 2 may generate the three-dimensional model. According to these constitutions, a quantity of processing executed in information processing apparatus 2 can be reduced.

In the second embodiment described above, correspondence between feature points in the planar developed image and feature points in the frontal image of the face are identified. When a position of a feature point in the planar developed image changes, a position of the feature points of the frontal image of the face is changed, and a changed facial expression is recognized. It is to be noted this constitution is not limitative.

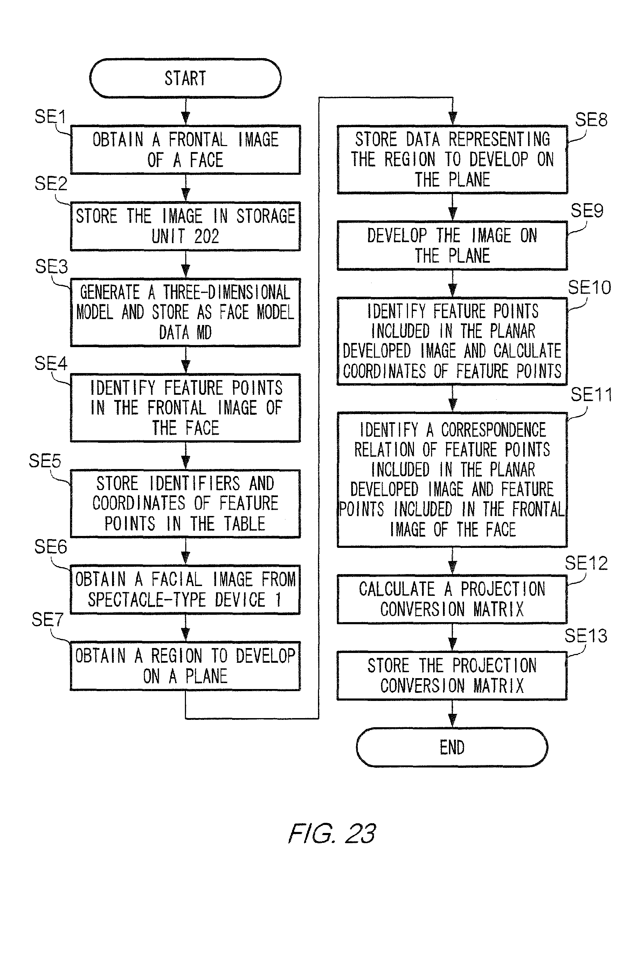

FIG. 23 is a flowchart showing a processing flow of a preparation operation of the present modification. In the FIG. 23, processing from step SE1 to step SE10 is not described, because the processing is the same as the processing from step SC 1 to step SC 10.

When concluding processing of step SE 10, information processing apparatus 2 identifies feature points, among the feature points identified at step SE 4, corresponding to the feature points identified at step SE10, and identifies correspondence relations between the identified feature points and the coordinates calculated at step SE10 (step SE11).

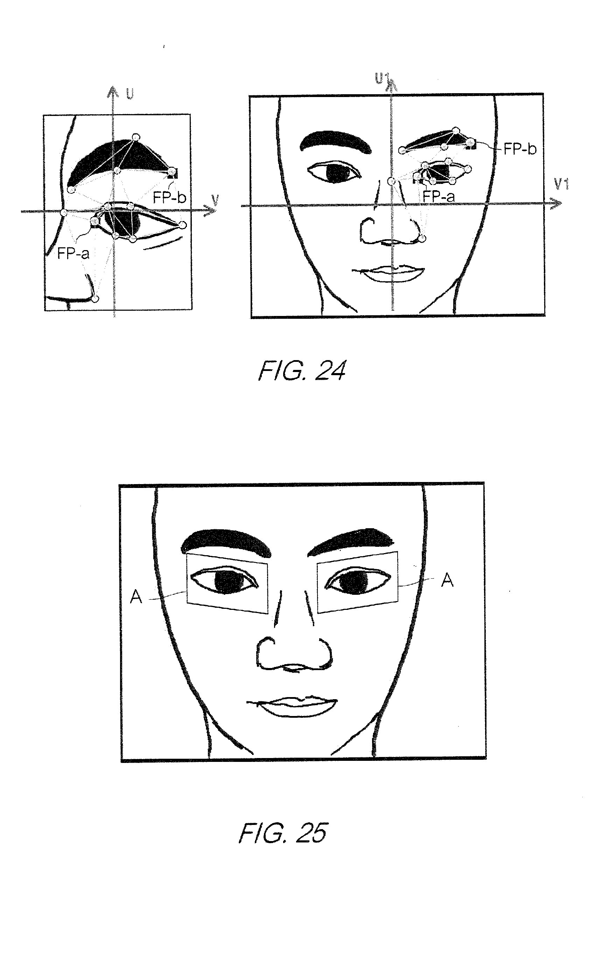

When concluding the processing of step SE11, information processing apparatus 2 calculates a projection conversion matrix to convert the planar developed image into the frontal image of the face (step SE12). Specifically, information processing apparatus 2, as shown in a left side of FIG. 24, generates plural triangle regions by connecting with lines feature points included in the planar developed image, and generates, as shown in a right side of FIG. 24, plural triangle regions by connecting with lines feature points included in the frontal image of the face. Regions, among the regions included in the frontal image of the face, corresponding to each region included in the planar developed image are identified, and the projection conversion matrix representing the correspondence of the regions included in the planar developed image and the regions included in the frontal image is calculated.

When concluding the processing of step SE12, information processing apparatus 2 stores the calculated projection conversion matrix in storage unit 202 (step SE13).

When storing the projection conversion matrix at the processing shown in FIG. 23, an output operation of information processing apparatus 2 is as follows. Information processing apparatus 2 generates triangle regions by connecting with lines the identified feature points after identifying the feature points in the planar developed image, and converts each image of the triangle region into a frontal image of the face using the stored projection conversion matrix. And information processing apparatus 2 recognizes the converted facial expression from the converted frontal image of the face (step SD 5).

Regarding the present modification, the image obtained by capturing is reflected to the frontal image of the face, and recognition of the facial expressions becomes easy because the regions obtained by connecting, with lines, feature points in the planar developed image are converted into the frontal image of the face.

In the above embodiments, the three-dimensional model of the face is processed based on the frontal image of the face. The embodiments are not limited to this constitution. For example, when processing the three-dimensional model of the face at step SB7 in the first embodiment, rectangle regions A shown in FIG. 25 may be extracted based on the image obtained at step SB4, and the three-dimensional model obtained by combining the extracted images may be output. Also, when processing the three-dimensional model of the face at step SD6 in the second embodiment, rectangle regions A shown in FIG. 25 may be extracted based on the image obtained at step SD4, and the three-dimensional model obtained by combining the extracted images may be output. Regarding the present modification, a realistic model can be output because it combines the images captured by a camera to the three-dimensional model.

It is to be noted that, like the above modification, when extracting specific regions from the frontal image of the face and combining them to form the three-dimensional model, a brightness of the extracted regions may differ from a brightness of the image of the three-dimensional model that is combined from the extracted regions, because a camera used for generating the three-dimensional model differs from a camera provided in spectacle-type device 1.

Therefore, like the above modification, when extracting specific regions from the frontal image of the face and combining them to form the three-dimensional model, a brightness of each image may be adjusted so that a brightness of the obtained image extracted from the frontal image of the face is close to the brightness of the image of the three-dimensional model. According to the present modification, a user is less aware of a discontinuity of brightness at a border of an image extracted from a frontal image of a face and an image of the three-dimensional model since intervals between a brightness of images are reduced.

Also, when combining the extracted image from the frontal image of the face with the image of three-dimensional model, such combination may be performed, for example, by way of an alpha blend. When performing an alpha blend, rates of blend may differ for each portion, for example, rates of blend may differ in a portion of eyes and a portion of skin. According to the present modification, a user is less aware of a discontinuity of brightness at a border of an image extracted from the frontal image of the face and the image of the three-dimensional model, in comparison with a case that the image extracted from the frontal image of the face is simply combined, by superimposing, with the image of the three-dimensional model.

Also, when combining the image extracted from the frontal image of the face with the image of three-dimensional model, regarding the border part, a rate of blend may be changed smoothly. According to the present modification, a user is also less aware of a discontinuity of brightness at the border between the image extracted from the frontal image of the face and the image of the three-dimensional model, in comparison with a case that the image extracted from the frontal image of the face is simply combined, by superimposing, with the image of the three-dimensional model.

## Claims

1. An apparatus for outputting information on a facial expression comprising:
a frame mounted on a head of a user;
an imaging unit that is attached to the frame and captures, from a predetermined direction, an image representing a face of the user;
a conversion unit that converts coordinates of a portion of the image captured by the imaging unit that represents a predetermined portion of the face of the user into coordinates in an image of the face captured from a direction different from the predetermined direction by a projection method different from the projection method employed in the imaging unit;
a recognition unit that recognizes a facial expression of the user based on the coordinates converted by the conversion unit; and
an output unit that outputs an image representing the facial expression recognized by the recognition unit.

2. The apparatus for outputting information on a facial expression according to claim 1, wherein
the frame has a shape of a spectacle frame,
an angle of view in the imaging unit is an angle of view in which the captured image represents at least the predetermined portion of the face, and
the apparatus further comprises a transmission unit that transmits the image output by the output unit to another device.

3. The apparatus for outputting information on a facial expression according to claim 1 or 2, wherein
the conversion unit maps the portion of the image representing the predetermined portion of the face to an image on a predetermined plane by use of mapping transformation, and converts coordinates in the portion of the mapped image on the predetermined plane representing the predetermined portion of the face into coordinates in an image of the predetermined portion of the face which is captured from a direction different from the predetermined direction.

4. The apparatus for outputting information on a facial expression according to any one of claims 1 to 3, wherein
the recognition unit recognizes the facial expression using an algorithm corresponding to a direction of the face in the image converted by the conversion unit.

5. The apparatus for outputting information on a facial expression according to any one of claims 1 to 4, further comprising:
an operation unit that is operated by a user, and
a region identifying unit that identifies a region designated in the image captured by the imaging unit based on an operation via the operation unit,
wherein
the conversion unit converts a portion of the image captured by the imaging unit in the region identified by the region identifying unit.

6. The apparatus for outputting information on a facial expression according to any one of claims 1 to 5, further comprising:
a storage unit that stores, in advance, the image of the face captured from the direction different from the predetermined direction by the projection method different from the projection method employed in the imaging unit,
wherein
the conversion unit identifies feature points of the face represented by the image captured by the imaging unit that correspond to feature points of the face represented by the image stored in the storage unit, and determines a calculation method for converting coordinates in the image captured by the imaging unit into coordinates in the image captured from the direction different from the predetermined direction based on coordinates of the identified feature points in the image captured by the imaging unit and coordinates of the feature points in the image stored in the storage unit corresponding to the identified feature points.

7. The apparatus for outputting information on a facial expression according to any one of claims 1 to 5, further comprising:
a storage unit that stores, in advance, the image of the face captured from the direction different from the predetermined direction by the projection method different from the projection method employed in the imaging unit,
wherein
the conversion unit identifies a region in the image of the face stored in the storage unit that corresponds to a region bounded by lines connecting feature points of the face represented by the image captured by the imaging unit, and determines a calculation method for converting the image captured by the imaging unit in the region bounded by lines connecting the feature points of the face into the image captured from the direction different from the predetermined direction based on the region bounded by lines connecting feature points of the face represented by the image captured by the imaging unit and the identified region in the image stored in the storage unit.

8. The apparatus for outputting information on a facial expression according to claim 6 or 7, wherein
the conversion unit converts the portion of the image captured by the imaging unit representing the predetermined portion of the face using the calculation method, and composes the converted image representing the predetermined portion of the face in a location of the predetermined portion of the face in the image stored in the storage unit.

9. The apparatus for outputting information on a facial expression according to any one of claims 1 to 8, wherein
the frame comprises a sensor that specifies a state of the head of the user, and
the recognition unit recognizes a facial expression of the user using the image converted by the conversion unit and the state specified by the sensor.

10. A method for outputting information on a facial expression comprising:
obtaining an image of a face of a user captured by an imaging unit that is attached to a frame mounted on a head of the user and capturing, from a predetermined direction, an image representing a face of the user;
converting coordinates of a portion of the image obtained in the obtaining step that represents a predetermined portion of the face of the user into coordinates in an image of the face captured from a direction different from the predetermined direction by a projection method different from the projection method employed in the imaging unit;
recognizing a facial expression of the user based on the coordinates converted in the converting step; and
outputting an image representing the facial expression recognized in the recognizing step.
